# EUROPEAN PATENT APPLICATION

(11) **EP 4 451 416 A1**
(43) Date of publication of application: **23.10.2024**
(21) Application number: 22949754.0
(22) Date of filing: 05.07.2022
(51) Int. Cl.: H01M 10/42, B60L 58/26

(54) **ENERGY STORAGE SYSTEM, AND THERMAL MANAGEMENT METHOD AND DEVICE FOR ENERGY STORAGE SYSTEM**

(71) Applicant: Contemporary Amperex Technology (Hong Kong) Limited, Central, Central And Western District (HK)
(72) Inventor: JIN, Qiu, Ningde, Fujian 352100 (CN); WANG, Xuehui, Ningde, Fujian 352100 (CN); CHEN, Xiaobo, Ningde, Fujian 352100 (CN)
(74) Representative: Gong, Jinping
(86) International application number: PCT/CN2022/103965
(87) International publication number: WO 2024/007166

(57) **Abstract**

Embodiments of the present application provide an energy storage system and a method and device for thermal management of the energy storage system, the energy storage system including a plurality of batteries and a liquid cooling system, wherein the liquid cooling system includes a plurality of water pumps corresponding to the plurality of batteries and a thermal management unit; and thermal management unit is configured to determine a first battery where a battery cell under thermal runaway is located, and to open a first water pump corresponding to the first battery, so as to cool the first battery. Each battery of the energy storage system is equipped with the corresponding water pump, so that when a battery cell in the battery is under thermal runaway, all that is needed for accurate cooling of the battery is to control the thermal management unit of the liquid cooling system to open the corresponding water pump, the safety of the energy storage system can be improved, and the power consumption of the liquid cooling system can be reduced.

## Description

### TECHNICAL FIELD

The present application relates to the technical field of batteries, in particular to an energy storage system and a method and device for thermal management of an energy storage system.

### BACKGROUND

An energy storage system includes a plurality of batteries connected in series and in parallel, battery cells in the batteries will be subjected to the accidental thermal runaway due to mechanical, environmental or manufacturing defects, heat released by the battery cells will be transferred to the battery cells around, which may result in thermal diffusion of the whole energy storage system finally if not treated timely, thereby causing second disasters such as burning, explosions, etc., and greatly affecting the safe and reliable operation of the energy storage system.

Therefore, there is an urgent need for a method capable of improving the safety of the energy storage system.

### SUMMARY

The present application provides an energy storage system and a method and device for thermal management of an energy storage system, can accurately cool batteries where battery cells under thermal runaway are located, and can prevent other batteries from being affected due to thermal diffusion of the batteries, thereby ensuring the safety of the energy storage system.

In a first aspect, the energy storage system is provided and comprises a plurality of batteries and a liquid cooling system, wherein the liquid cooling system comprises a plurality of water pumps corresponding to the plurality of batteries and a thermal management unit; and thermal management unit is configured to determine a first battery where a battery cell under thermal runaway is located, and to open a first water pump corresponding to the first battery, so as to cool the first battery.

In an embodiment of the present application, each battery of the energy storage system is equipped with the corresponding water pump, so that when a battery cell in the battery is under thermal runaway, all that is needed for accurate cooling of the battery is to control the thermal management unit of the liquid cooling system to open the water pump corresponding to the battery, and other batteries can be prevented from being affected due to thermal diffusion of the battery, thereby improving the safety of the whole energy storage system. In addition, since the battery where the battery cell under thermal runaway is located can be cooled accurately, the power consumption of the liquid cooling system can be reduced.

In some embodiments, the energy storage system further comprises a battery management system; the thermal management unit is configured to receive first indication information sent by the battery management system, the first indication information being configured to indicate the first battery; and the thermal management unit is configured to determine the first battery according to the first indication information.

In the above implementation manner, the thermal management unit can determine, according to the first indication information, the battery where the battery cell under thermal runaway is located, thereby opening the water pump corresponding to the battery to accurately cool the battery, ensuring the safety of the energy storage system, and reducing the power consumption of the liquid cooling system.

In some embodiments, the first indication information comprises position information or identification information of the first battery.

In some embodiments, the battery management system is configured to receive abnormal indication information, the abnormal indication information being configured to indicate the battery cell under thermal runaway; and the battery management system is configured to determine, according to the abnormal indication information, the first battery where the battery cell under thermal runaway is located, and to send the first indication information to the thermal management unit.

In the above implementation manner, the battery management system serves as a control center of the energy storage system, can determine the battery cell under thermal runaway of the energy storage system according to the abnormal indication information, and can determine, according to an object sending the abnormal indication information, the battery where the battery cell under thermal runaway is located, thereby indicating the thermal management unit of the liquid cooling system to open the water pump corresponding to the battery to accurately cool the battery, preventing other batteries from being affected due to thermal diffusion of the battery, improving the safety of the energy storage system, and reducing the power consumption of the liquid cooling system.

In some embodiments, the thermal management unit is also configured to receive second indication information sent by the battery management system, the second indication information comprising power information of the first water pump; and the thermal management unit is also configured to adjust power of the first water pump according to the second indication information.

In the above implementation manner, the power of the water pump is adjustable, and the thermal management unit can adjust the power of the first water pump according to an instruction of the battery management system, thereby achieving the balance of the cooling effect and the power consumption so as to further reduce the power consumption of the liquid cooling system.

In some embodiments, the battery management system is also configured to determine the power of the first water pump and to send the second indication information to the thermal management unit.

In the above implementation manner, the battery management system can determine the power of the first water pump or make a power plane of the first water pump according to the requirements of manufacturers or the actual situations, for example, the severity of the thermal runaway, so as to reduce the power consumption of the liquid cooling system.

In some embodiments, the battery management system is configured to acquire an operating state of the battery cell under thermal runaway and to determine the power of the first water pump according to the operating state of the battery cell under thermal runaway.

In the above implementation manner, the battery management system can adjust the power of the first water pump according to the operating state of the battery cell under thermal runaway, thereby achieving the balance of the cooling effect and the power consumption so as to reduce the power consumption of the liquid cooling system to the maximum extent.

In some embodiments, the battery management system is configured to determine the power of the first water pump according to an opening time period of the first water pump.

In the above implementation manner, the battery management system can set different power within the opening time period of the first water pump according to a state rule of the battery cell after thermal runaway, thereby achieving the balance of the cooling effect and the power consumption so as to reduce the power consumption of the liquid cooling system.

In some embodiments, the time period comprises a plurality of sub-time periods, and the power of the first water pump is different in at least two of the sub-time periods; or the power of the first water pump is gradually reduced in the time period.

In the above implementation manner, the opening time period of the first water pump is divided into the plurality of sub-time periods, and the first water pump is set at different power in the different sub-time periods, so that the power can be reduced step by step with the sub-time periods serving as boundaries, or the power of the first pump can be gradually reduced within the whole opening time period, thereby reducing the power consumption of the liquid cooling system.

In some embodiments, each of the batteries further comprises a detector for collecting operating states of battery cells in the battery, determining each battery cell under thermal runaway according to the operating state, and sending the abnormal indication information to the battery management system.

In the above implementation manner, each battery is equipped with the detector, so that the battery management system can determine, according to the abnormal indication information reported by the detector, which battery is internally provided with the battery cell under thermal runaway, thereby accurately cooling the battery cell to reduce the power consumption of the liquid cooling system.

In some embodiments, each of the detectors comprises at least one of a smell sensor, a smoke sensor and an electrolyte leakage sensor.

In the above implementation manner, the various sensors are added to the batteries, so that the battery management system can determine, in more ways, whether there is the battery cell under thermal runaway, thereby quickly responding to such abnormal situation, and improving the safety of the energy storage system.

In some embodiments, a power supply system of the energy storage system stops supplying power to the liquid cooling system when there is the battery cell under thermal runaway; and the energy storage system further comprises an emergency power supply for supplying power to the thermal management unit and the first water pump when the power supply system stops supplying power to the liquid cooling system.

In the above implementation manner, the emergency power supply is provided to supply power to the liquid cooling system, so that it can be ensured that the liquid cooling system will not stop working due to the fact that there is the battery cell under thermal runaway in the energy storage system, and the safety of the energy storage system is further improved.

In some embodiments, the emergency power supply supplies power to the thermal management unit and the first water pump by means of a DC power supply circuit; or the emergency power supply is connected to an AC power supply circuit of the liquid cooling system by means of an inverter so as to supply power to the liquid cooling system, the inverter being configured to convert a direct current of the emergency power supply to an alternating current required by the liquid cooling system.

In the above implementation manner, the emergency power supply can supply power, by means of the DC power supply circuit, to the thermal management unit and the first water pump corresponding to the first battery where the battery cell under thermal runaway is located, thereby ensuring the safety of the liquid cooling system, reducing the configuration capacity of the emergency power supply, and saving the cost and the space.

In a second aspect, a method for thermal management of an energy storage system is provided. The energy storage system comprises a plurality of batteries and a liquid cooling system; the liquid cooling system comprises a plurality of water pumps corresponding to the plurality of batteries and a thermal management unit; and the method comprises: determining, by the thermal management unit, a first battery where a battery cell under thermal runaway is located; and opening, by the thermal management unit, a first water pump corresponding to the first battery, so as to cool the first battery.

In an embodiment of the present application, each battery of the energy storage system is equipped with the corresponding water pump, so that when a battery cell in the battery is under thermal runaway, all that is needed for accurate cooling of the battery is to enable the thermal management unit to open the corresponding water pump, and other batteries can be prevented from being affected due to thermal diffusion of the battery, thereby ensuring the safety of the energy storage system. In addition, since the battery where the battery cell under thermal runaway is located can be cooled accurately, the power consumption of the liquid cooling system can be reduced.

In some embodiments, the determining, by the thermal management unit, a first battery where a battery cell under thermal runaway is located comprises: receiving, by the thermal management unit, first indication information sent by a battery management system, wherein the first indication information is configured to indicate the first battery; and determining, by the thermal management unit, the first battery according to the first indication information.

In the above implementation manner, the thermal management unit can determine, according to the first indication information, the battery where the battery cell under thermal runaway is located, thereby opening the water pump corresponding to the battery to accurately cool the battery, ensuring the safety of the energy storage system, and reducing the power consumption of the liquid cooling system.

In some embodiments, the first indication information comprises position information or identification information of the first battery.

In some embodiments, the thermal management unit receives second indication information, wherein the second indication information comprises power information of the first water pump; and the thermal management unit adjusts power of the first water pump according to the second indication information.

In the above implementation manner, the power of the water pump is adjustable, and the thermal management unit can adjust the power of the first water pump according to an instruction of the battery management system, thereby achieving the balance of the cooling effect and the power consumption so as to further reduce the power consumption of the liquid cooling system.

In a third aspect, a method for thermal management of an energy storage system is provided. The energy storage system comprises a plurality of batteries, a liquid cooling system and a battery management system; the liquid cooling system comprises a plurality of water pumps corresponding to the plurality of batteries and a thermal management unit; and the method comprises: receiving, by the battery management system, abnormal indication information, wherein the abnormal indication information is configured to indicate a battery cell under thermal runaway; determining, by the battery management system according to the abnormal indication information, a first battery where the battery cell under thermal runaway is located; and sending, by the battery management system, first indication information to the thermal management unit to enable the thermal management unit to open a first water pump corresponding to the first battery, so as to cool the first battery, wherein the first indication information is configured to indicate the first battery.

In the above implementation manner, the battery management system serves as a control center of the energy storage system, can determine the battery cell under thermal runaway of the energy storage system according to the abnormal indication information, and can determine, according to an object sending the abnormal indication information, the battery where the battery cell under thermal runaway is located, thereby indicating the thermal management unit of the liquid cooling system to open the water pump corresponding to the battery to accurately cool the battery, preventing other batteries from being affected due to thermal diffusion of the battery, improving the safety of the energy storage system, and reducing the power consumption of the liquid cooling system.

In some embodiments, the first indication information comprises position information or identification information of the first battery.

In some embodiments, the method further comprises: determining, by the battery management system, power of the first water pump; and sending, by the battery management system, second indication information to the thermal management unit, wherein the second indication information comprises power information of the first water pump.

In the above implementation manner, the battery management system can determine the power of the first water pump or make a power plane of the first water pump according to the requirements of manufacturers or the actual situations, for example, the severity of the thermal runaway, so as to reduce the power consumption of the liquid cooling system.

In some embodiments, the determining, by the battery management system, power of the first water pump comprises: acquiring, by the battery management system, an operating state of the battery cell under thermal runaway, and determining the power of the first water pump according to the operating state of the battery cell under thermal runaway.

In the above implementation manner, the battery management system can adjust the power of the first water pump according to the operating state of the battery cell under thermal runaway, thereby achieving the balance of the cooling effect and the power consumption so as to reduce the power consumption of the liquid cooling system to the maximum extent.

In some embodiments, the battery management system determines the power of the first water pump according to an opening time period of the first water pump.

In the above implementation manner, the battery management system can set different power within the opening time period of the first water pump according to a state rule of the battery cell after thermal runaway, thereby achieving the balance of the cooling effect and the power consumption so as to reduce the power consumption of the liquid cooling system.

In some embodiments, the time period comprises a plurality of sub-time periods, and the power of the first water pump is different in at least two of the sub-time periods; or the power of the first water pump is gradually reduced in the time period.

In the above implementation manner, the opening time period of the first water pump is divided into the plurality of sub-time periods, and the first water pump is set at different power in the different sub-time periods, so that the power can be reduced step by step with the sub-time periods serving as boundaries, or the power of the first pump can be gradually reduced within the whole opening time period, thereby reducing the power consumption of the liquid cooling system.

In a fourth aspect, a device for thermal management of an energy storage system is provided and comprises a processor and a memory, wherein the memory is configured to store a program; and the processor is configured to call and run the program from the memory so as to execute the method according to any one of the possible implementation manners in the second aspect and the third aspect.

In a fifth aspect, a computer readable storage medium is provided and comprises a computer program which, when being run on a computer, enables the computer to execute the method according to any one of the possible implementation manners in the second aspect and the third aspect.

In an embodiment of the present application, each battery of the energy storage system is equipped with the corresponding water pump, so that when the battery cell in the battery is under thermal runaway, all that is needed for accurate cooling of the battery is to control the thermal management unit of the liquid cooling system to open the corresponding water pump, and other batteries can be prevented from being affected due to thermal diffusion of the battery, thereby ensuring the safety of the energy storage system. In addition, since the battery where the battery cell under thermal runaway is located can be cooled accurately, the power consumption of the liquid cooling system can be reduced.

### BRIEF DESCRIPTION OF THE DRAWINGS

In order to explain technical solutions of embodiments of the present application more clearly, drawings needed in the embodiments of the present application will be briefly introduced below. Obviously, the drawings in the following description are only some embodiments of the present application, and for those of ordinary skill in the art, other drawings can be obtained according to these drawings without involving any inventive effort.
FIG. 1 is an architecture schematic diagram of an energy storage system disclosed in an embodiment of the present application;
FIG. 2 is a structural schematic diagram of another energy storage system disclosed in an embodiment of the present application;
FIG. 3 is a structural schematic diagram of another energy storage system disclosed in an embodiment of the present application;
FIG. 4 is a connection schematic diagram of a power supply manner of a liquid cooling system disclosed in an embodiment of the present application;
FIG. 5 is a connection schematic diagram of a power supply manner of another liquid cooling system disclosed in an embodiment of the present application;
FIG. 6 is a schematic flow chart of a method for thermal management of an energy storage system disclosed in an embodiment of the present application;
FIG. 7 is a schematic flow chart of a method for thermal management of another energy storage system disclosed in an embodiment of the present application; and
FIG. 8 is a schematic structure diagram of a device for thermal management of an energy storage system disclosed in an embodiment of the present application.

With regard to the accompanying drawings, they are not drawn to the actual scale.

### DETAILED DESCRIPTION OF THE EMBODIMENTS

The implementation of the present application is further described in detail below with reference to the accompanying drawings and embodiments. The detailed description of the embodiments and the accompanying drawings below are intended to illustrate the principles of the present application by examples, but are not intended to limit the scope of the present application, that is, the present application is not limited to the described embodiments.

In the description of the present application, it should be noted that, unless otherwise noted, "a plurality of' means two or more; and orientation or positional relationships indicated by the terms "upper", "lower", "left", "right", "inner", "outer", and the like are only for the convenience of description of the present application and simplification of description rather than indicating or implying that the referenced device or element must have a particular orientation or be constructed and operated in a particular orientation, and thus are not to be construed as limiting the present application. In addition, the terms "first", "second", "third", and the like are used for descriptive purposes only and are not to be construed as indicating or implying relative importance. "Vertical" is not strictly vertical, but within the allowable range of error. "Parallel" is not strictly parallel, but within the allowable range of error.

Orientation words appearing in the following description are all directions shown in the drawings and do not limit the specific structure of the present application. In the description of the present application, it should also be noted that, unless otherwise expressly specified and limited, the terms "mounted", "connected" and "attached" should be understood in a broad sense, for example, it can be "fixedly connected" or "detachably connected", or "integrally connected"; and it can be "directly connected" or "indirectly connected by means of an intermediate medium". The specific meanings of the above terms in the present application may be understood by those of ordinary skill in the art depending on specific circumstances.

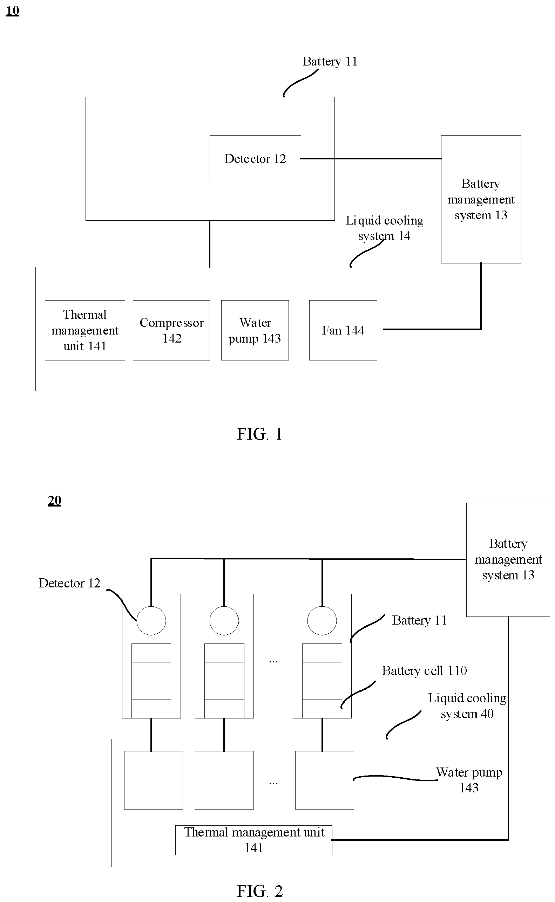

FIG. 1 is an architecture diagram of an energy storage system 10 provided in the present application. As shown in FIG. 1, the energy storage system 10 may include a battery 11, a detector 12, a battery management system 13 and a liquid cooling system 14. The liquid cooling system 14 may include a thermal management unit 141, a compressor 142, a water pump 143 and a fan 144.

The detector 12 may be a temperature sensor and is configured to detect the temperature of the battery 11. When the temperature of the battery 11 is higher than a preset temperature threshold, a signal may be sent to the battery management system 13, the battery management system 13 sends a corresponding refrigerating instruction to the liquid cooling system 14 after receiving the signal, and the liquid cooling system 14 starts circulating work to cool the battery 11.

The liquid cooling system 14 may include the thermal management unit 141, the compressor 142, the water pump 143 and the fan 144. The thermal management unit 141 may be configured to control cooperation of various components in the liquid cooling system 14 to execute the refrigerating instruction of the battery management system 13 so as to cool the battery 11.

The compressor 142 is a driven fluid machine for elevating a low-pressure gas to a high pressure, is the heart of a refrigerating system, sucks a low-temperature and low-pressure refrigerant gas from a gas suction pipe, compresses said gas by driving a piston through operation of an electric motor, and then discharges a high-temperature and high-pressure refrigerant liquid to an exhaust pipe to provide power for a refrigerating cycle.

An outlet of the water pump 143 may be connected to the battery 11, so that the battery 11 is cooled by means of a cooling liquid flowing out. The water pump 143 is a power source of the whole liquid cooling system, and can control the liquid flow at the outlet, thereby ensuring that the battery 11 has the sufficient flow of the cooling liquid, and ensuring the consistency of the supply flow.

The fan 144 is also known as a heat dissipation fan, and can cool the liquid in a cooling liquid pipeline of the liquid cooling system 14.

It should be understood that the connection relationships of circuits are not defined in embodiments of the present application, and during the actual application, the components in FIG. 1 may also be connected to other devices.

At present, an energy storage system in the market is usually a large-capacity energy storage system, and the energy storage system will internally include a plurality of batteries connected in series and in parallel. During the usage process of the energy storage system, battery cells in the batteries will be subjected to the accidental thermal runaway due to mechanical, environmental or manufacturing defects, heat released by the battery cells will be transferred to the battery cells around, which may result in thermal diffusion of the whole energy storage system finally if not treated timely, thereby causing second disasters such as burning, explosions, etc., and greatly affecting the safe and reliable operation of the energy storage system. Therefore, there is a need for a method capable of improving the safety of the energy storage system.

In view of this, the embodiments of the present application provide an energy storage system and a method for thermal management of the energy storage system, the energy storage system including a plurality of batteries and a liquid cooling system, wherein the liquid cooling system includes a plurality of water pumps corresponding to the plurality of batteries, when a battery cell is under thermal runaway, the water pump corresponding to the battery where the battery cell is located is opened, and the ineffective battery can be cooled accurately. By means of the solution, thermal diffusion of the energy storage system can be prevented, and the power consumption of the liquid cooling system can be reduced. Solutions in the embodiments of the present application will be described in detail below in conjunction with the accompanying drawings.

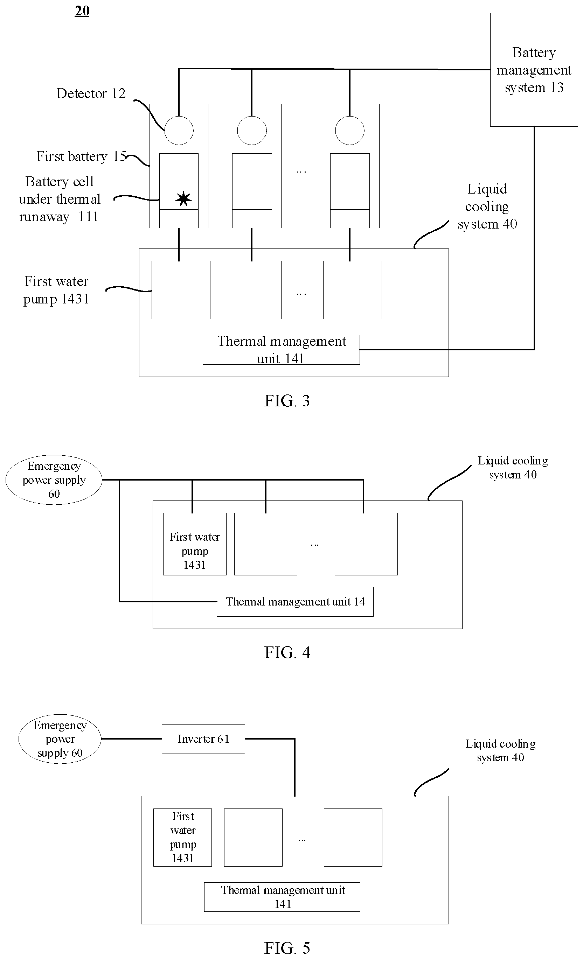

FIGS. 2 and 3 are structural schematic diagrams of an energy storage system 20 according to an embodiment of the present application. FIG. 3 is a structural schematic diagram of the energy storage system 20 when a battery cell is under thermal runaway. As shown in FIGS. 2 and 3, the energy storage system 20 includes a plurality of batteries 11 and a liquid cooling system 40, wherein the liquid cooling system 40 includes a plurality of water pumps 143 corresponding to the plurality of batteries 11 and a thermal management unit 41. The thermal management unit 41 may be configured to determine a first battery 15 where a battery cell 111 under thermal runaway is located, and to open a first water pump 1431 corresponding to the first battery 15, so as to cool the first battery 15.

Each battery 11 includes one or more battery cells 110.

When a certain battery cell 110 is under thermal runaway to become the battery cell 111 under thermal runaway, the thermal management unit 41 determines the first battery 15 corresponding to the battery cell 111 under thermal runaway and opens the first water pump 1431 corresponding to the first battery 15, so that a cooling liquid in a connecting pipeline of the first water pump 1431 and the first battery 15 may circulate continuously, then the ineffective first battery 15 is cooled accurately, and the power consumption of the liquid cooling system 40 is reduced.

Optionally, in some embodiments, the energy storage system 20 may further include a battery management system 13; the thermal management unit 41 may be configured to receive first indication information sent by the battery management system 13, the first indication information being configured to indicate the first battery 15; and then the thermal management unit determines the first battery 15 according to the first indication information.

The battery management system 13 is mainly configured to intelligently manage and maintain the battery cells, and can prevent over-charging and over-discharging of the batteries, prolong the service life of the batteries, and monitor the states of the batteries. The battery management system 13 may be connected to the thermal management unit 41 of the liquid cooling system 40.

It should be understood that if the battery cell 110 is under thermal runaway, the battery 11 where the battery cell 110 is located is an ineffective battery. In case of the battery cell 111 under thermal runaway, the thermal management unit 41 may receive the first indication information sent by the battery management system 13, determine, according to the first indication information, the first battery 15 where the battery cell 111 under thermal runaway is located, and then open the first water pump 1431 corresponding to the first battery 15 to cool the first battery 15, thereby accurately cooling the ineffective battery, and reducing the power consumption of the liquid cooling system 40. In addition, thermal diffusion of the whole energy storage system 20 can be prevented, and the safety of the energy storage system 20 can be improved.

Optionally, in some embodiments, the plurality of batteries 11 may correspond to one water pump 143, that is, all the batteries 11 in the energy storage system 20 can be divided into a plurality of battery clusters, each battery cluster corresponds to one water pump 143, and each battery cluster includes a plurality of batteries. When the battery cell 110 of a certain battery 11 in the battery cluster is under thermal runaway, the water pump 143 corresponding to the battery cluster can cool the plurality of batteries 11 in the battery cluster at the same time, thereby preventing thermal diffusion of the energy storage system 20. For example, the energy storage system includes M batteries 11, the M batteries 11 may correspond to N water pumps 143, M and N are natural numbers, and M > N. Compared with the solution of equipping each battery 11 with one water pump 143, the solution of equipping a plurality of batteries with one water pump can reduce the configuration of the energy storage system 20, thereby saving the space and resources.

Optionally, in some embodiments, the first indication information may include position information or identification information of the first battery 15.

According to the above-mentioned embodiments, the thermal management unit 41 may open the first water pump 1431 corresponding to the first battery 15 according to the position information or identification information of the first battery 15, thereby accurately cooling the ineffective battery, and reducing the power consumption of the liquid cooling system 40. In addition, thermal diffusion of the whole energy storage system 20 can be prevented, and the safety of the energy storage system 20 can be improved.

Optionally, in some embodiments, the battery management system 13 may be configured to receive abnormal indication information, the abnormal indication information being configured to indicate the battery cell 111 under thermal runaway; and the battery management system may also determine, according to the abnormal indication information, the first battery 15 where the battery cell 111 under thermal runaway is located, and send the first indication information to the thermal management unit 41.

In the embodiments of the present application, after receiving the abnormal indication information, the battery management system 13 may determine, according to an object sending the abnormal indication information, which battery 11 internally has the battery cell 110 under thermal runaway, thereby sending information of the battery 11 to the thermal management unit 41 to enable the thermal management unit 41 to open the water pump 143 corresponding to the battery 11 to cool the battery 11, thus thermal diffusion of the whole energy storage system 20 is prevented, and the power consumption of the liquid cooling system 40 is also reduced due to accurate cooling.

Optionally, in some embodiments, the thermal management unit 41 may also be configured to receive second indication information sent by the battery management system 13, the second indication information including power information of the first water pump 1431; and the thermal management unit 41 may also be configured to adjust power of the first water pump 1431 according to the second indication information.

It should be understood that the power of the first water pump 1431 is adjustable, for example, the power of the first water pump 1431 can be adjusted by controlling power supply power. The battery management system 13 may send the second indication information to the thermal management unit 41 to indicate the thermal management unit 41 to adjust the power of the first water pump 1431, wherein the second indication information includes the power information of the first water pump 1431.

The power information of the first water pump 1431 may include a set power value and an opening time duration, and may also include a power adjustment strategy, for example, power is supplied at a first power value when the first water pump 1431 is opened, and then the power is reduced by 1/10 every ten minutes over time.

Optionally, in some embodiments, the battery management system 13 may also be configured to determine the power of the first water pump 1431 and to send the second indication information to the thermal management unit 41.

The battery management system 13 can determine the power of the first water pump 1431 or make a power plane of the first water pump 1431 according to the requirements of manufacturers or the actual situations, for example, the severity of the thermal runaway, so as to reduce the power consumption of the liquid cooling system 40.

Optionally, in some embodiments, the battery management system 20 may be configured to acquire an operating state of the battery cell 111 under thermal runaway and to determine the power of the first water pump 1431 according to the operating state of the battery cell 111 under thermal runaway.

It should be understood that the operating state of the battery cell 310 may be monitoring data such as a temperature, a voltage, etc.

After determining that there is the battery cell 111 under thermal runaway and indicating the thermal management unit 41 to open the first water pump 1431, the battery management system 20 may also acquire the operating state of the battery cell 111 under thermal runaway in real time and adjust the power of the first water pump 1431 according to the operating state in real time. For example, the battery management system 13 acquires the temperature of the battery cell 111 under thermal runaway in real time, the temperature is generally relatively high in the early stage of thermal runaway, the first water pump 1431 can use the highest power at this moment to cool the first battery 15, and then the power of the first water pump 1431 can be gradually reduced as the temperature drops.

In the above-mentioned embodiments, the operating state of the battery cell 111 under thermal runaway can be acquired in real time to adjust the power of the first water pump 1431 for cooling said battery cell, thereby achieving the balance of the cooling effect and the power consumption so as to reduce the power consumption of the liquid cooling system 40 to the maximum extent.

Optionally, in some embodiments, the battery management system 13 may be configured to determine the power of the first water pump 1431 according to an opening time period of the first water pump 1431.

It should be understood that when the battery 11 is cooled by the water pump 143, generally, the battery management system 13 will set an opening time period of the water pump 143, that is, a time duration, for example, the water pump 143 is continuously opened for one hour, and the time may also be set as other durations according to the actual requirements, which is not limited in the present application.

The battery management system 13 may set different power within the opening time period of the first water pump 1431 according to a state rule of the battery cell 110 after thermal runaway, thereby achieving the balance of the cooling effect and the power consumption so as to reduce the power consumption.

Optionally, in some embodiments, the time period may include a plurality of sub-time periods, and the power of the first water pump 1431 is different in at least two of the sub-time periods; or the power of the first water pump 1431 is gradually reduced in the time period.

In order to reduce the power consumption, the opening time period of the first water pump 1431 may be divided into the plurality of sub-time periods, and different power is set within the different time periods. For example, the opening time period of the first water pump 1431 is one hour, the one hour is divided into three sub-time periods, and the duration of each sub-time period is 20 minutes. The first battery 15 is in the early stage of thermal runaway in the first sub-time period, so that the power of the first water pump 1431 may be set as the highest power; after cooling for the first sub-time period, the temperature of the first battery 15 is reduced, and part of the power may be reduced in the second sub-time period for cooling; and by means of cooling for the previous two sub-time periods, the temperature of the first battery 15 is lower, and the first water pump 1431 may operate at a relatively low power at this moment, thereby achieving the balance of the cooling effect and the power consumption so as to reduce the power consumption.

The power of the first water pump 1431 may be gradually reduced in the opening time period, for example, in a linear reduction or curved reduction manner, thereby achieving the balance of the cooling effect and the power consumption so as to reduce the power consumption of the liquid cooling system 40.

Optionally, in some embodiments, each of the batteries 11 may further include a detector 12 for collecting operating states of battery cells 110 in the battery 11, determining each battery cell 111 under thermal runaway according to the operating state, and sending the abnormal indication information to the battery management system 13.

It should be understood that each battery 11 in the plurality of batteries includes the detector 12, and during usage of the battery 11, the detector 12 may detect each battery cell 110 in the battery 11 in real time to determine whether the battery cell 110 is within a safe range, thereby determining whether the battery cell 110 is abnormal, that is, whether the battery cell 110 is under thermal runaway.

After collecting the operating states of the battery cells 110, each detector 12 may determine, according to the operating states, whether there is the battery cell 111 under thermal runaway. Usually, it can be determined that there is the battery cell 111 under thermal runaway on the basis of the following features: the temperature of a monitoring point reaches a highest working temperature specified by a manufacturer; and a triggering object has a voltage drop, and the ratio of a drop value to an initial voltage exceeds a preset ratio. When any one of the above-mentioned features occurs, it is determined that there is the battery cell 111 under thermal runaway.

Optionally, in some embodiments, each of the detectors 12 may further include at least one of a smell sensor, a smoke sensor and an electrolyte sensor.

It should be understood that, apart from the temperature sensor and the voltage sensor used conventionally to detect the operating states of the battery cells 110, the smell sensor, the smoke sensor or the electrolyte sensor may also be used in the embodiments of the present application to detect whether the battery cells 110 are under thermal runaway. That is, it can also be determined that there is the battery cell 111 under thermal runaway on the basis of the following features: a specific smell is detected and identified at the monitoring point; smoke is detected and identified at the monitoring point; and a liquid is detected at an electrolyte leakage sensing line. When any one of the above-mentioned features occurs, it is determined that there is the battery cell 111 under thermal runaway.

In the above-mentioned embodiments, the various sensors are added to the batteries 11, so that the battery management system 13 can determine, in more ways, whether there is the battery cell 111 under thermal runaway, thereby quickly responding to such abnormal situation, and improving the safety of the energy storage system 20.

Optionally, in some embodiments, a power supply system of the energy storage system 20 stops supplying power to the liquid cooling system 40 when there is the battery cell 111 under thermal runaway; and the energy storage system 20 may further include an emergency power supply 60 for supplying power to the thermal management unit 41 and the first water pump 1431 when the power supply system 60 stops supplying power to the liquid cooling system 40.

It should be understood that ensuring the power supply of the liquid cooling system 40, particularly the power supply of the thermal management unit 41 and the first water pump 1431 in the liquid cooling system 40, is the key for achieving an active cooling strategy of the first battery in the above-mentioned energy storage system 20. The conventional liquid cooling system 40 only has one power supply, that is, electric energy provided by the power supply system, and the power supply system can be understood as a mains supply. When there is the battery cell 111 under thermal runaway, the power supply system will stops supplying power to the liquid cooling system 40. In order to handle such situation, the energy storage system 20 in the embodiments of the present application is equipped with the emergency power supply 60 which can ensure the power supply of the thermal management unit 41 and the first water pump 1431 after the power supply system stops supplying power to the liquid cooling system 40, so as to cool the first battery 15 where the battery cell 111 under thermal runaway is located, thereby ensuring there is no thermal diffusion in the energy storage system 20, and improving the safety of the energy storage system 20.

For example, the emergency power supply 60 may be a storage battery, and the storage battery may supply power to the thermal management unit 41 and the water pump 143. Specifically, when there is the battery cell 111 under thermal runaway, the battery management system 40 controls the storage battery to supply power to the thermal management unit 41 and the first water pump 1431, when the storage battery outputs currents to the thermal management unit 41 and the first water pump 1431, the thermal management unit 41 begins to receive the indication information of the battery management system 13, the first water pump 1431 begins to operate to control a cooling liquid in a connecting pipeline of the first water pump 1431 and the first battery 15 to circulate so as to cool the first battery 15, thereby preventing thermal diffusion of the energy storage system 20, and improving the safety of the energy storage system 20.

Optionally, in some embodiments, reference is made to FIGS. 4 and 5, the emergency power supply 60 may supply power to the thermal management unit 41 and the first water pump 1431 by means of a DC power supply circuit; or the emergency power supply 60 may be connected to an AC power supply circuit of the liquid cooling system 40 by means of an inverter 61 so as to supply power to the liquid cooling system 40, the inverter 61 being configured to convert a direct current of the emergency power supply 60 to an alternating current required by the liquid cooling system 40.

It should be understood that when the emergency power supply 60 supplies power to the thermal management unit 41 and the first water pump 1431 by means of the DC power supply circuit, the emergency power supply 60 is connected between the thermal management unit 41 and the first water pump 1431 to directly transmit the direct current to the thermal management unit 41 and the first water pump 1431.

When the emergency power supply 60 is connected to the AC power supply circuit of the liquid cooling system 40 by means of the inverter 61 so as to supply power to the liquid cooling system 40, the inverter 61 is configured in a connecting circuit of the emergency power supply 60 and the liquid cooling system 40, and the direct current of the emergency power supply 60 is converted into the alternating current by the inverter 61 to be transmitted to the liquid cooling system 40.

The inverter 61 may also be other inverter modules, all that is required is to convert the direct current output by the emergency power supply 60 into the alternating current required by the liquid cooling system 40 so as to ensure the power supply of the liquid cooling system 40, thereby ensuring the normal operation of the thermal management unit 41 and the first water pump 1431 in the liquid cooling system 40.

In the above-mentioned embodiments, the emergency power supply 60 can supply power, by means of the DC power supply circuit, to the thermal management unit 41 and the first water pump 1431 corresponding to the first battery 15 where the battery cell 111 under thermal runaway is located, thereby ensuring the safety of the liquid cooling system 40, reducing the configuration capacity of the emergency power supply 60, and saving the cost and the space.

It should be understood that the connection relationships of circuits are not defined in embodiments of the present application, and during the actual application, the components in FIGS. 2-5 may also be connected to other devices.

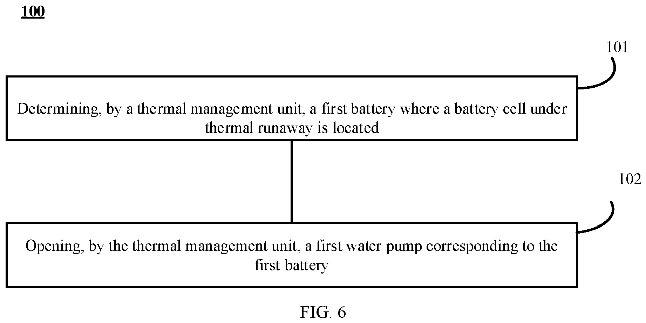

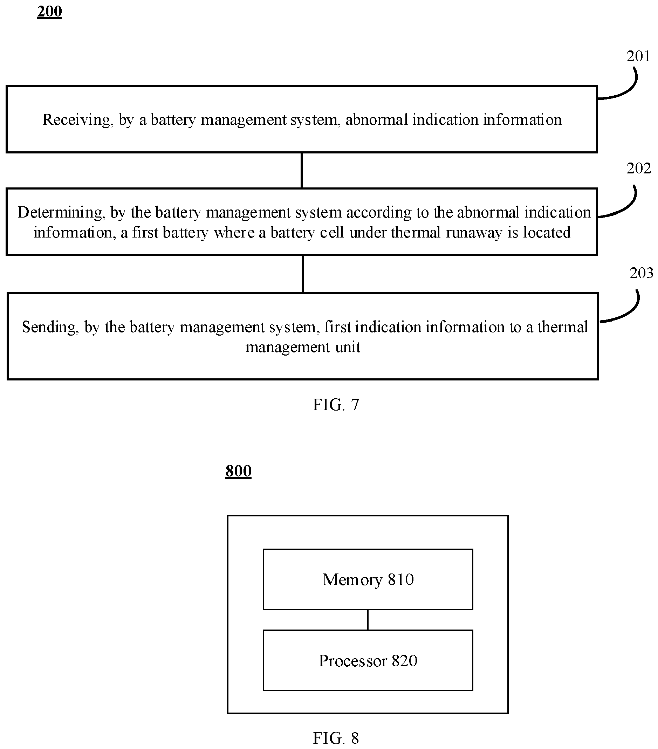

The embodiments of the energy storage system of the present application are described in detail above in conjunction with FIGS. 2-5. The embodiments of a method for thermal management of an energy storage system of the present application are described in detail below in conjunction with FIGS. 6 and 7. It should be understood that the embodiments of the method correspond to the embodiments of the energy storage system, and similar descriptions may refer to the embodiments of the energy storage system.

FIG. 6 shows a schematic flow chart of a method 100 for thermal management of an energy storage system in an embodiment of the present application. An execution body for the method 100 is a thermal management unit, and the thermal management unit may be the thermal management unit 41 of the above-mentioned energy storage system 20.

As shown in FIG. 6, the method 100 for thermal management of the energy storage system may include the following steps:
101, determining, by the thermal management unit 41, the first battery 15 where the battery cell 111 under thermal runaway is located; and
102, opening, by the thermal management unit 41, the first water pump 1431 corresponding to the first battery 15, so as to cool the first battery 421.

Optionally, in some embodiments, in step 101, the thermal management unit 41 may receive the first indication information sent by the battery management system 13, the first indication information being configured to indicate the first battery 15; and then the thermal management unit 41 determines the first battery 15 according to the first indication information.

Optionally, in some embodiments, the first indication information may include position information or identification information of the first battery 15.

Optionally, in some embodiments, the method 100 may further include: receiving, by the thermal management unit 41, the second indication information, wherein the second indication information includes power information of the first water pump 1431; and adjusting, by the thermal management unit 41, the power of the first water pump 1431 according to the second indication information.

FIG. 7 shows a schematic flow chart of a method 200 for thermal management of an energy storage system in an embodiment of the present application. An execution body for the method 200 for thermal management of the energy storage system is a battery management system, and the battery management system may be the battery management system 13 of the above-mentioned energy storage system 20.

As shown in FIG. 7, the method 200 for thermal management of the energy storage system may include the following steps:
201, receiving, by the battery management system 13, the abnormal indication information, wherein the abnormal indication information is configured to indicate the battery cell 111 under thermal runaway;
202, determining, by the battery management system 13 according to the abnormal indication information, the first battery 15 where the battery cell 111 under thermal runaway is located; and
203, sending, by the battery management system, the first indication information to the thermal management unit 41 to enable the thermal management unit 41 to open the first water pump 1431 corresponding to the first battery 150, so as to cool the first battery 150, wherein the first indication information is configured to indicate the first battery 150.

Optionally, in some embodiments, the first indication information may include position information or identification information of the first battery 150.

Optionally, in some embodiments, the method 200 may further include: determining, by the battery management system 13, the power of the first water pump 1431, and then sending the second indication information to the thermal management unit 41, wherein the second indication information includes the power information of the first water pump 1431.

Optionally, in some embodiments, the battery management system 13 may acquire the operating state of the battery cell 111 under thermal runaway when determining the power of the first water pump 1431 and can determine the power of the first water pump 1431 according to the operating state of the battery cell 111 under thermal runaway.

Optionally, in some embodiments, the battery management system 13 may determine the power of the first water pump 1431 according to the opening time period of the first water pump 1431 when determining the power of the first water pump 1431.

Optionally, in some embodiments, the battery management system 13 determines the power of the first water pump 1431 according to the opening time period of the first water pump 1431, the time period may include the plurality of sub-time periods, and the power of the first water pump 1431 is different in at least two of the sub-time periods; or the power of the first water pump 1431 may be gradually reduced in the time period.

FIG. 8 shows a schematic structure diagram of a device 800 for thermal management of an energy storage system provided in an embodiment of the present application.

As shown in FIG. 8, the device 800 includes at least one processor 810 and a memory 820, wherein the memory 820 is configured to store a program; and the at least one processor 810 is configured to call and run the program from the memory 820 so as to execute the method provided in any one of the above-mentioned embodiments. For example, the device 800 may be the thermal management unit 141 for executing the method 100 provided in any one of the above-mentioned embodiments; and the device 800 may also be the battery management system 13 for executing the method 200 provided in any one of the above-mentioned embodiments.

An embodiment of the present application further provides a computer readable storage medium. The computer readable storage medium stores a computer program which, when being run on a computer device, enables the computer device to execute the method provided in any one of the above-mentioned embodiments.

An embodiment of the present application further provides a computer program product including a computer program. When being run on a computer device, the computer program product enables the computer device to execute the method provided in any one of the above-mentioned embodiments.

An embodiment of the present application further provides a chip. The chip includes a processor and a data interface, wherein the processor reads an instruction, stored in a memory, by means of the data interface so as to execute the method provided in any one of the above-mentioned embodiments.

In the specific implementation process, the chip may be achieved in the form of a central processing unit (CPU), a micro controller unit (MCU), a micro processing unit (MPU), a digital signal processor (DSP), a system on chip (SoC), an application-specific integrated circuit (ASIC), a field-programmable gate array (FPGA) or a programmable logic device (PLC).

Optionally, in specific implementation, the number of the processors is not limited. The processor is a general-purpose processor, and optionally, the general-purpose processor can be achieved by means of hardware or software. When the processor is achieved by means of the hardware, the processor is a logic circuit, an integrated circuit, etc. When the processor is achieved by means of the software, the processor is the general-purpose processor and is achieved by reading software codes stored in the memory, and the memory is integrated in the processor, is located outside the processor, or exists independently.

The above-mentioned embodiments are completely or partially achieved by means of the software, the hardware, firmware or any combination thereof. When achieved by means of the software, the above-mentioned embodiments are completely or partially achieved in the form of the computer program product. The computer program product includes one or more computer instructions or computer programs. When the computer instructions or computer programs are loaded or executed by a computer, all of them or part of them generate the flows or functions according to the embodiments of the present application.

Optionally, the computer is a general-purpose computer, a special-purpose computer, a computer network or other programmable devices. The computer instruction can be stored in the computer readable storage medium or be transmitted from one computer readable storage medium to another computer readable storage medium, for example, the computer instruction is transmitted from one website, one computer, one server or one data center in a wired (for example, infrared, wireless, microwave, etc.) manner to another website, another computer, another server or another data center.

The computer readable storage medium is any available medium that can be accessed by the computer or a data storage device such as the server and the data center including one or more available medium sets. The available medium is a magnetic medium (for example, a floppy disk, a hard disk and a magnetic tape), an optical medium (for example, a DVD), or a semiconductor medium, for example, a solid state disk.

It should be understood that the term "and/or" herein is only intended to describe association relationships of related objects, and indicates that there are three relationships, for example, the expression of "A and/or B" indicates the following three conditions: A exists separately, A and B exist at the same time, and B exists separately; and A and B are singular or plural. In addition, the character "/" herein generally indicates that the associated objects have an "or" relationship, but may also indicate an "and/or" relationship, and reference can be made to the context for understanding.

In the present application, "at least one" means one or more, and "a plurality of' means two or more. "At least one of the following items (pieces)" or similar expressions mean any combination of these items, including the single item (piece) or any combination of multiple items (pieces). For example, at least one of a, b or c indicates a, b, c, a-b, a-c, b-c or a-b-c, wherein each of a, b and c means a single piece or multiple pieces.

It should be understood that in the various embodiments of the present application, the serial numbers of the processes do not mean the execution sequence, the execution sequence of the processes should be determined according to the functions and the internal logic, and the serial numbers should not constitute any restriction on the implementation process of the embodiments of the present application.

Those of ordinary skill in the art can realize that modules and algorithm steps combined with various examples described in the embodiments disclosed herein can be achieved by means of electronic hardware or the combination of computer software and the electronic hardware. Whether these functions are performed in the form of hardware or software depends on specific application and design constraint conditions of the technical solutions. Professional technicians can achieve the described functions by different methods for each specific application. However, such achieving should not exceed the scope of the present application.

Those skilled in the art can clearly know that for the convenience and simplicity in description, the specific working processes of the above-mentioned systems, devices and modules should refer to the corresponding processes in the above-mentioned method embodiments and will not be repeated here.

In the several embodiments provided in the present application, it should be understood that the disclosed systems, devices and methods can be achieved in other manners.

For example, the above-mentioned device embodiments are only schematic, for example, division of the modules is only division of logic functions, and the modules can be divided in other manners during actual implementation, for example, a plurality of modules or components are combined or integrated to another system, or some features can be omitted or not executed. On the other hand, the displayed or discussed mutual coupling or direct coupling or communication connection is indirect coupling or communication connection of devices or modules by means of some interfaces, and is in the electrical or mechanical form or in other forms.

Optionally, various functional modules in the embodiments of the present application can be integrated in one processing device. Optionally, the modules separately and physically exist, or two or more modules are integrated in one module.

If being realized in the form of software functional modules and sold or used as independent products, the functions can be stored in the computer readable storage medium. On the basis of this understanding, the essential technical solution of the present application, or the part contributing to the prior art, or part of the technical solution can be embodied in the form of a software product, and the computer software product is stored in the storage medium and includes several instructions to make the computer device (which is a personal computer, a server or a network device) execute all or part of the steps of the methods in the various embodiments of the present application. The above-mentioned storage medium includes: a USB flash drive, a removable hard disk, a read-only memory (ROM), a random access memory (RAM), a magnetic disk, an optical disk, or other media that can store program codes.

The above embodiments are only the preferred embodiments of the present application, but the scope of protection of the present application is not limited to these embodiments. Any technician familiar with the technical field can easily conceive of modifications or replacements within the scope of technologies of the present application, and these modifications or replacements should fall within the scope of protection of the present application. Therefore, the scope of protection of the present application should be subject to the scope of protection of the claims.

## Claims

1. An energy storage system, comprising a plurality of batteries and a liquid cooling system, wherein the liquid cooling system comprises a plurality of water pumps corresponding to the plurality of batteries and a thermal management unit; and
the thermal management unit is configured to determine a first battery where a battery cell under thermal runaway is located, and to open a first water pump corresponding to the first battery, so as to cool the first battery.

2. The energy storage system according to claim 1, further comprising a battery management system,
wherein the thermal management unit is configured to receive first indication information sent by the battery management system, the first indication information being configured to indicate the first battery; and
the thermal management unit is configured to determine the first battery according to the first indication information.

3. The energy storage system according to claim 2, wherein the first indication information comprises position information or identification information of the first battery.

4. The energy storage system according to claim 2 or 3,
wherein the battery management system is configured to receive abnormal indication information, the abnormal indication information being configured to indicate the battery cell under thermal runaway; and
the battery management system is configured to determine, according to the abnormal indication information, the first battery where the battery cell under thermal runaway is located, and to send the first indication information to the thermal management unit.

5. The energy storage system according to any one of claims 2-4,
wherein the thermal management unit is also configured to receive second indication information sent by the battery management system, the second indication information comprising power information of the first water pump; and
the thermal management unit is also configured to adjust power of the first water pump according to the second indication information.

6. The energy storage system according to claim 5, wherein the battery management system is also configured to determine the power of the first water pump and to send the second indication information to the thermal management unit.

7. The energy storage system according to claim 6, wherein the battery management system is configured to acquire an operating state of the battery cell under thermal runaway and to determine the power of the first water pump according to the operating state of the battery cell under thermal runaway.

8. The energy storage system according to claim 6, wherein the battery management system is configured to determine the power of the first water pump according to an opening time period of the first water pump.

9. The energy storage system according to claim 8, wherein the time period comprises a plurality of sub-time periods, and the power of the first water pump is different in at least two of the sub-time periods; or the power of the first water pump is gradually reduced in the time period.

10. The energy storage system according to any one of claims 4-9, wherein each of the batteries further comprises a detector for collecting operating states of battery cells in the battery, determining each battery cell under thermal runaway according to the operating state, and sending the abnormal indication information to the battery management system.

11. The energy storage system according to claim 10, wherein each of the detectors comprises at least one of a smell sensor, a smoke sensor and an electrolyte leakage sensor.

12. The energy storage system according to claims 1-11, wherein a power supply system of the energy storage system stops supplying power to the liquid cooling system when there is the battery cell under thermal runaway; and
the energy storage system further comprises an emergency power supply for supplying power to the thermal management unit and the first water pump when the power supply system stops supplying power to the liquid cooling system.

13. The energy storage system according to claim 12,
wherein the emergency power supply supplies power to the thermal management unit and the first water pump by means of a DC power supply circuit; or
the emergency power supply is connected to an AC power supply circuit of the liquid cooling system by means of an inverter so as to supply power to the liquid cooling system, the inverter being configured to convert a direct current of the emergency power supply to an alternating current required by the liquid cooling system.

14. A method for thermal management of an energy storage system, wherein the energy storage system comprises a plurality of batteries and a liquid cooling system; the liquid cooling system comprises a plurality of water pumps corresponding to the plurality of batteries and a thermal management unit; and
the method comprises:
determining, by the thermal management unit, a first battery where a battery cell under thermal runaway is located; and
opening, by the thermal management unit, a first water pump corresponding to the first battery, so as to cool the first battery.

15. The method according to claim 14, wherein the determining, by the thermal management unit, a first battery where a battery cell under thermal runaway is located comprises:
receiving, by the thermal management unit, first indication information sent by a battery management system, wherein the first indication information is configured to indicate the first battery; and
determining, by the thermal management unit, the first battery according to the first indication information.

16. The method according to claim 15, wherein the first indication information comprises position information or identification information of the first battery.

17. The method according to any one of claims 14-16, further comprising:
receiving, by the thermal management unit, second indication information, wherein the second indication information comprises power information of the first water pump; and
adjusting, by the thermal management unit, power of the first water pump according to the second indication information.

18. A method for thermal management of an energy storage system, wherein the energy storage system comprises a plurality of batteries, a liquid cooling system and a battery management system; the liquid cooling system comprises a plurality of water pumps corresponding to the plurality of batteries and a thermal management unit; and
the method comprises:
receiving, by the battery management system, abnormal indication information, wherein the abnormal indication information is configured to indicate a battery cell under thermal runaway;
determining, by the battery management system according to the abnormal indication information, a first battery where the battery cell under thermal runaway is located; and
sending, by the battery management system, first indication information to the thermal management unit to enable the thermal management unit to open a first water pump corresponding to the first battery, so as to cool the first battery, wherein the first indication information is configured to indicate the first battery.

19. The method according to claim 19, wherein the first indication information comprises position information or identification information of the first battery.

20. The method according to claim 18 or 19, further comprising:
determining, by the battery management system, power of the first water pump; and
sending, by the battery management system, second indication information to the thermal management unit, wherein the second indication information comprises power information of the first water pump.

21. The method according to claim 20, wherein the determining, by the battery management system, power of the first water pump comprises:
acquiring, by the battery management system, an operating state of the battery cell under thermal runaway, and determining the power of the first water pump according to the operating state of the battery cell under thermal runaway.

22. The method according to claim 20, wherein the determining, by the battery management system, power of the first water pump comprises:
determining, by the battery management system, the power of the first water pump according to an opening time period of the first water pump.

23. The method according to claim 22, wherein the time period comprises a plurality of sub-time periods, and the power of the first water pump is different in at least two of the sub-time periods; or the power of the first water pump is gradually reduced in the time period.

24. A device for thermal management of an energy storage system, the device comprising a processor and a memory, wherein the memory is configured to store a program; and the processor is configured to call and run the program from the memory so as to execute the method according to any one of claims 14-23.

25. A computer readable storage medium, comprising a computer program which, when being run on a computer, enables the computer to execute the method according to any one of claims 14-23.
